# EUROPEAN PATENT APPLICATION

(11) **EP 3 588 257 A1**
(43) Date of publication of application: **01.01.2020**
(21) Application number: 18179966.9
(22) Date of filing: 26.06.2018
(51) Int. Cl.: G06F 3/0484, G06F 9/451

(54) **ADAPTIVE VISUALIZATION OF DEVICE SYMBOLS BY COMPUTERS THAT CONTROL A TECHNICAL SYSTEM**

(71) Applicant: ABB Schweiz AG, 5400 Baden (CH)
(72) Inventor: STARK, Katharina, 68526 Ladenburg (DE)
(74) Representative: Zahn, Matthias

(57) **Abstract**

Computer-implemented method and control computer are provided for setting up devices that belong to a technical system. The devices have memory units that store instructions. The control computer provides a plurality of symbols on a display (250). The symbols represent the devices. The computer receives a zoom indicator and selects a symbol. The computer displays the selected symbol on the display (250) that represents a selected device. Depending on the zoom indicator, the control computer displays a jump control symbol (260-J) in association with the selected symbol. Upon receiving a user interaction with the jump control symbol (260-J), the control computer activates an instruction tool (230) that enables manipulating the instructions of the selected device.

## Description

### Technical Field

The disclosure generally relates to devices in a technical system, and more in particular, the disclosure relates to a computer-implemented method, to a computer system with a control computer and to a computer program in relation to devices that participate in process automation and to user-interaction while the device are being set up.

### Background

Industrial sites, industrial plants, buildings and so on have technical systems that comprise equipment. To name only a few examples, such equipment comprise industrial machines, chemical processors, transportation systems and other equipment.

The equipment has several different components that need to interact. In many cases, in technical systems, these components and/or data regarding the components are collectively referred to as "project". Much simplified, during preparation phases, the technical systems are prepared for operation on site. The preparation phases usually include an engineering phase and - subsequently - a commissioning phase. Engineering can sometimes be referred to as "project engineering", and commissioning can sometimes be referred to as "project commissioning". Depending on component granularity, each phase can be further differentiated, for example, into a "basic" phase and a "detail" phase. In the following, the difference between the phases can be neglected so that the phases are collectively called "engineering/commissioning".

The process of commissioning (or installation) technical systems on industrial sites shows complexity, for a number of reasons such as: there are different persons with different knowledge or skills, different manufacturers of system components, or different physical locations of people.

Since more and more of the system components are computing devices - components with computing capacity - complexity is further increased by software aspects. The devices have memory units that store instructions to be executed by processing units of the devices, but the instructions have to be configured when the devices are being installed and tested for use by the technical system. Therefore, engineering/commissioning a technical system is also a software-related process that further involves, for example: different persons with different software skills, different types, concepts, programming languages, development environments for computer software (for the devices), different amounts of computer instructions due to scaling effects, or different data to be transmitted between locations. Also, the plant or site in the real world with its installations, instrumentations (devices), controllers etc. has be taken into account, at least during commissioning.

An approach to deal with complexity is seen as visualizing the technical system by computers that are separated from the devices. But there is a risk that the complexity of the technical system translates into complexity of the visualization.

Further, it makes a difference to a computer user if data is conveyed by alphanumeric characters or by graphical elements. Characters can be very accurate but extremely time-consuming for the user to understand; graphics can be easy to understand but potentially not much precise. Visualizing the system is further inherently limited by the size of the display that the user can look at. Such different visualization aspects can become contradictory.

### Summary

Embodiments of the present invention address the mentioned complexity and other constraints by providing a computer-implemented method, a computer system with a control computer and a computer program.

The control computer interacts with a human user by symbolizing devices and by letting the user manipulate the above-mentioned instructions for the device. A plurality of devices - the mentioned "project" - belongs to a technical system. The instructions for the devices are being set up (engineered, configured etc.) by using a computer-implemented method that is performed by the control computer. In a providing step, the control computer provides a plurality of symbols to the user on a display. The symbols represent at least some of the devices. In a receiving step, the control computer receives a zoom indicator and selects at least one symbol (of the symbols). In a displaying step, the control computer displays the at least one selected symbol on the display. The at least one selected symbol represents at least one selected device. Depending on the zoom indicator, the control computer also displays at least one jump control symbol in association with the at least one selected symbol. The jump control symbol is an interactive control element for the user to interact and to navigate. Upon receiving user interaction with the jump control symbol, the control computer activates an instruction tool - such as a development environment - for the instructions of the selected device that enables the user to manipulate the instructions of the selected devices. A change of an instruction causes a change in the technical state of the at least one selected device.

Such an approach reduces complexity for the user, for at least two reasons: First, it limits the number of symbols on the display, and second it allows the user to reach the instruction tool that is applicable for the selected device. This approach allows the user to work with the control computer in an intuitive way. From a different perspective, the method provides navigation to the instructions, but avoids navigation within the instruction tool. Instead, the method lets the user navigate with an initial selection of symbols via the zoom indicator and with a follow-up selection via the jump control symbol that is available to the user conditionally on the zoom indicator.

Providing the jump control symbol in association with selected symbols/devices is not the only support to the user. Optionally, the control computer obtains data (regarding the status of the technical system), to be displayed in association with the selected symbols. Thereby, the control computer informs the user about the status of the technical system. In such embodiment, the technical system provides a plurality of data records (with data regarding the status of the technical system) to a network at a network interface. In a forwarding step, the control computer forwards an identification of the at least one selected device to the network interface. In a receiving step, the control computer receives a sub-plurality of data-records from the network interface (i.e. regarding the mentioned status). In a displaying step, the control computer displays the sub-plurality of data-records on the display in association with the at least one selected symbol.

Optionally, in step receiving the zoom control indicator, the control computer receives the zoom control indicator as a numerical value that determines the scaling of the symbols in relation to the size of the display. The control computer receives the zoom control indicator through interaction with the user. The zoom indicator can be related to the overall number of pixels on the display. Using pixels preserves independency from the physical size of the display that may vary.

Optionally, in step receiving the zoom indicator, the control computer compares the numerical value to at least one threshold value to provide a zoom range classification. The zoom range classification determines a selection of symbol variants for the symbol that are to be displayed according to pre-defined rules. Such an approach eases the computation but keeps the complexity for the user at minimum.

Optionally, depending on the zoom indicator, the control computer can display at least one view control symbol in association with the at least one selected symbol. Upon receiving user interaction with the view control symbol, the control computer can change the appearance of the at least one selected symbol. The approach gives the user further options to toggle between views, but keeps the scaling.

Optionally, the control computer can use a control interface to implement a user interaction function, for adapting a visualization zoom, for jumping to an instruction development environment, or for switching a view of the selected symbols.

Optionally, in step receiving a zoom indicator, the control computer can use the zoom indicator to select element symbols that represent elements (being part of the devices) or can select parameter symbols that represent parameters of the devices. Simplified, zooming in leads to a transition (or substitution) from device symbols to element symbols (and/or parameter symbols), and zooming out transits to device symbols. However, symbols in both granularities can be displayed simultaneously.

A control computer enables a user to set up devices that belong to a technical system. The control computer comprises a display, and the control computer is adapted to perform the computer-implemented method.

### Brief Description of the Drawings

FIG. 1 illustrates an overview to a technical system and to a control computer;
FIG. 2 illustrates a view at a different granularity showing a device with device elements, data with element-specific data and the control computer with symbols;
FIG. 3 illustrates a matrix with user roles for human users that interact with the technical system and with the control computer;
FIG. 4 illustrates the technical system with a plurality of devices and with a network interface that communicates selected data to the control computer via a network;
FIG. 5 illustrates a display of the control computer in combination with user interaction symbols being a zoom control symbol, a jump control symbol, and a view control symbol;
FIG. 6 illustrates the display of the control computer in variations for four zoom indicators in combination with a table;
FIG. 7 illustrates the display in variations with different element symbols, with view control symbols;
FIG. 8A and 8B illustrate the display with jump control symbols in variations with different symbols and in variations with different instruction tools;
FIG. 9 illustrates a flow-chart diagram of a computer-implemented method for setting up devices, wherein a plurality of devices belongs to the technical system; and
FIG. 10 is a diagram that shows an example of a generic computer device and a generic mobile computer device, which may be used with the techniques described herein.

### Detailed Description

### Overview to the technical system at device granularity

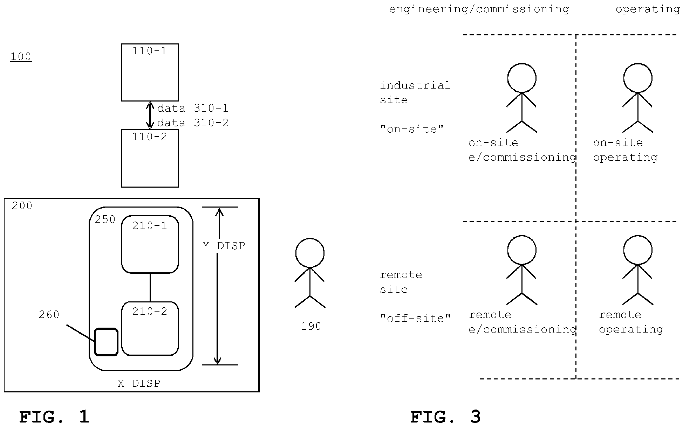

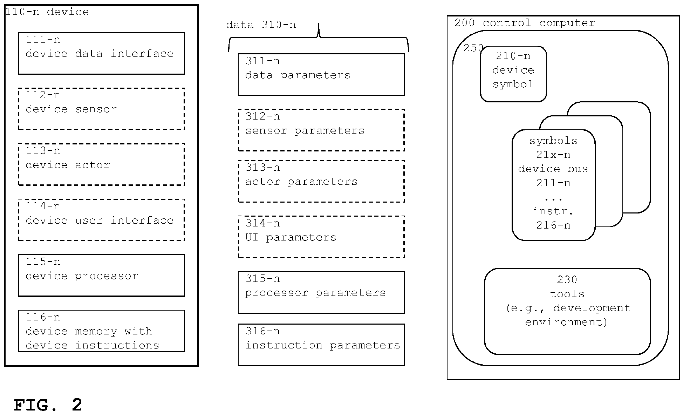

FIG. 1 illustrates an overview to technical system 100 and to control computer 200. Control computer 200 controls technical system 100 during engineering/commissioning and - optionally - during operation, at the granularity of devices (here in FIG. 1), of device elements and of device data (cf. FIG. 2).

The separation into technical system 100 and control computer 200 is convenient for explanation, but it is also possible to implement control computer 200 to be an integral part of technical system 100.

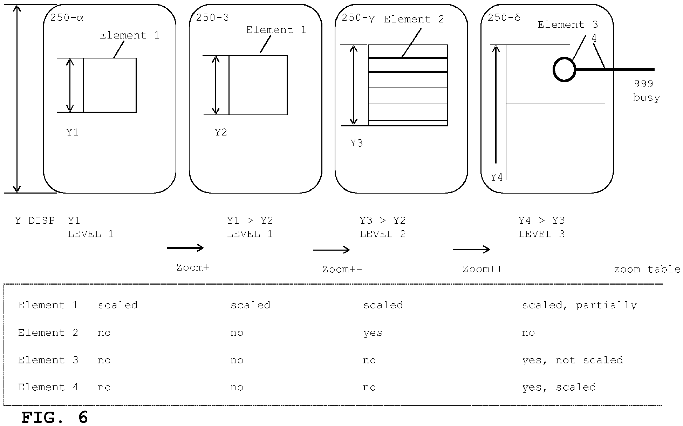

Control computer 200 comprises user-interface elements, with - at least - display 250. Display 250 of computer 200 collectively stands for user-interface elements that allow visual presentation of symbols to user 190. The display can be implemented as a screen, as a projector or otherwise. The size of display 250 can be measured by numbers of pixels (in vertical and horizontal direction, such as YDISP and XDISP, respectively), or otherwise (e.g., in length units). As different display types show pixels in different dimensions (cf. hand-sized displays vs. wall-sized projections), the use of pixels is convenient to illustrate measures, such as scaling (cf. FIGS. 6-8).

Control computer 200 has at least one main function: Being a "visualization computer", computer 200 visually represents technical system 100 on display 250 to user 190. Besides that, control computer 200 can also be a "command computer" that processes system data and that interferes with the operation of technical system 100. While the description concentrates on the visualization function, the command function will also be explained, mostly in connection with the user who manipulates instructions. To name only a few functional details, control computer 200 can visualize measurement values, parameters, variables, instructions etc. to the user (i.e. representations of the technical state of the technical system), and the user can interact with the control computer to manipulate some of them (e.g., by changing instructions, by deploying instructions, by compiling instructions from source code, by linking instructions, by setting variables etc.). In other words, the control computer presents technical status information regarding the technical system to the user, for the purpose of changing the state of the system if needed.

Technical system 100 comprises devices 110-1, 110-2, collectively devices 110. As mentioned above, the devices are system components with computing capacity. For simplicity, non-device components of technical system 100 are not illustrated. The number N = 2 is just a convenient simplification. In real industrial scenarios, the number of devices can be different. For example, in some situations, the number of devices can be N = 1000 or higher.

The connecting line between devices 110-1 and 110-2 illustrates that the devices can be communicatively coupled with each other. This is also illustrated by device data, such as data 310-1 provided by device 110-1 and data 310-2 provided by device 110-2.

Devices 110 can belong to a Distributed Control System (DCS) and/or to a collaborative Process Automation System (CPAS) that controls technical system 100. Devices 110 have device elements. For convenience of illustration, the device elements are classified into instruction elements and further elements (details in FIG. 2).

In the device, the instruction elements are data-interface, processor and memory unit. The memory unit stores instructions, and the processor is able to execute a computer program according to the instructions. The further elements are sensors, actors, and user-interfaces (cf. FIG. 2 for more details). The further elements are optional in the sense that a device has at least the instruction elements in combination with one further element.

Self-similarity is possible so that sensors, actors and user-interfaces can comprise data-interface, processor and memory as well. For simplicity of illustration the sensors, actors and user-interfaces are assumed to be without instruction elements.

Control computer 200 also comprises processor and memory (not illustrated). Control computer 200 represents devices 110-1, 110-2, by device symbols 210-1, 210-2, respectively, on the display. In the figures, device symbols are squares with "round" corners. The connection line between the device symbols stands for device data. The connection line is a symbol as well. As is it will be explained, control computer 200 can show the symbols (such as the device symbols) with much more detail, depending on the scaling even with reality-approximate images.

Control computer 200 also comprises user-interface elements for receiving input from user 190 (e.g., keyboard, pointing devices such as mouse or track-ball, gesture recognition, voice recognition etc.). Such UI-elements can be combined with the display, for example in a touch-screen. Persons of skill in the art can implement the user-interface elements otherwise.

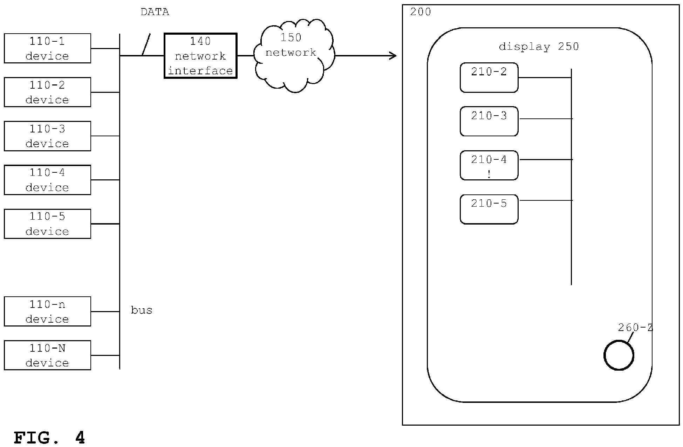

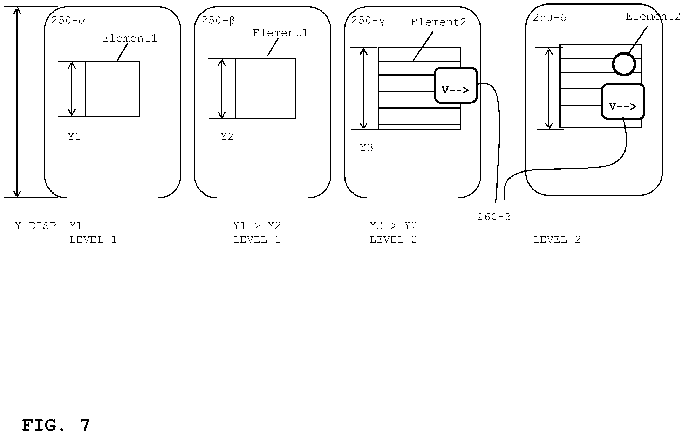

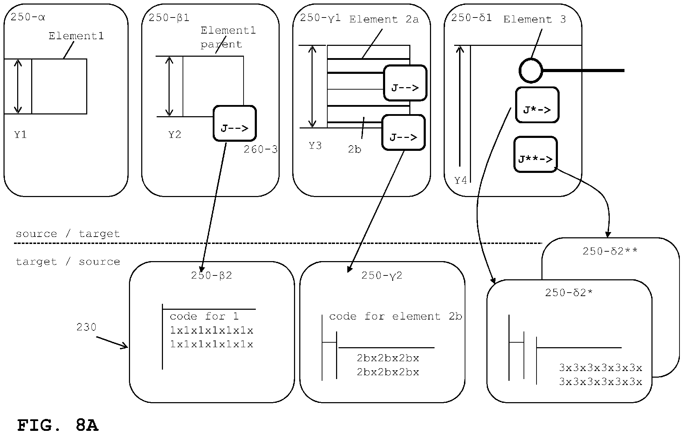

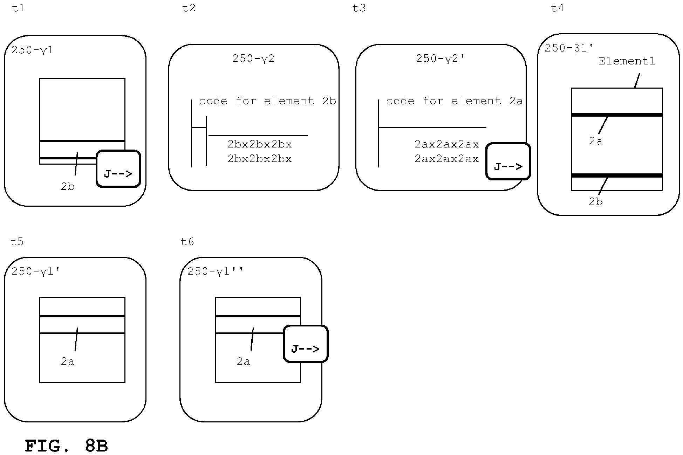

Among these UI-elements, control interface 260 collectively stands for a user interaction function of control computer 200. These functions are: Z - adapting a visualization zoom (cf. FIGS. 4 and 6) to select symbols, and to select corresponding devices, J - jumping to an instruction tool, such as an instruction development environment (cf. FIGS. 8A, 8B), and V - switching a view of the (selected) symbols (cf. FIG. 7).

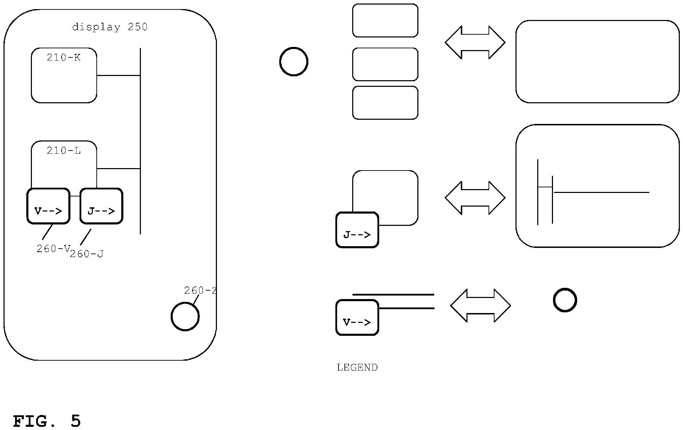

Control interface 260 can be implemented on display 250 or otherwise by the mentioned UI-elements for receiving input. Since the location of control interface 260 can depend on the visualization of the symbols (cf. FIGS. 7-8A, 8B), control interface 260 will be illustrated on display 250 as user interaction symbols (cf. FIG. 5 for a legend). The uppercase letters Z, J and V refer to the function.

For simplicity, control computer 200 is illustrated as a single computer, but the number of such computers can be different. Control computer 200 can be implemented as a system of multiple inter-connected computers, with specialized tasks (such as identifying symbols, rendering symbols to images on display, collecting computer instructions for the devices etc.)

Control computer 200 (or at least the parts that are near to the display) can be implemented by a computer that is suitable for interaction with user 190. Examples comprise desktop computers, notebook computers, mobile devices ("smart phone") or the like.

The overview of FIG. 1 is simplified. The person of skill in the art understands that technical system 100 can be connected to other computers (or computer systems), among them enterprise resource planning systems ERP, with asset management and other functions.

Those of skill in the art can replace technical system 100 (with its components) at least partly as a computer-simulated system or "virtual system". Techniques for mirroring system components to so-called "digital twins" are available in the art.

### Overview at element granularity

FIG. 2 illustrates a view at a different granularity showing device 110-n (with device elements), data 301-n (with element-specific data) and control computer 200 (with symbols, cf. "round" squares). Correspondence is indicated by similar references, in that index n stands for a particular device, and references 11x, 21x, and 31x stand for different device elements, element symbols, and data elements. The further device elements (and the corresponding data elements) are illustrated by dashed frames.

Device 110-n is a device for use in technical system 100 (cf. FIG. 1). Examples for the devices are: (i) Programmable Logic Controllers (PLC). Such controllers are commercially available from different manufacturers. For example, the manufacturer ABB AG offers such controllers in the series AC500. (ii) Drives with electrical motors. The drives receive control commands from PLC controllers via a bus. (iii) Heating units or compressor units. (iv) HMI-devices (Human-Machine Interaction/Interface) or SCADA-stations (Supervisory Control and Data Acquisition).

Device data 310-n collectively stands for data that is related to the device, such as input data to device 110-n, output data from device 110-n, and data being processed within device 110-n. The "within-processed" data comprises instructions that are inserted into device 110-n and that control the operation of the device.

Looking at display 250 of control computer 200 (illustrated on the right side with more details than in FIG. 1), device symbol 210-n (already introduced in connection with FIG. 1 as symbol 210-1, 210-2) symbolizes device 110-n and - optionally - illustrates device data 310-n, on control computer 200.

The description now continues with increasing granularity at element level, this is simplified for illustration. Applying hierarchy, device elements belong to the device, the device elements are sub-ordinated to the device. The person of skill in the art can apply other granularities. It is noted that devices can be sub-ordinated to higher level components, conveniently called "elements" as well.

Device 110-n has device elements 11x-n, such as device data interface 111-n, optional device sensor 112-n, optional device actor 113-n, optional device user interface 114-n, device processor 115-n, and device memory unit 116-n (with the instructions). As explained, some of the further elements (sensor/actor/user-interface) are optional.

By way of example, the device elements are now further explained:
- Device data interface 111-n comprises sub-elements such as digital input/output units, analog-to-digital converters (ADC), digital-to-analog converters (DAC), and/or interfaces for busses (e.g., PROFINET bus, FIELDBUS bus etc.).
- Device sensor 112-n - if used - comprises sensors to obtain data for physical phenomena (related to the technical system) such as temperature, pressure, electrical current, voltage. It also can obtain data for events (e.g., by being an event counter). Sensor 112-n can also be an image device (e.g., a camera).
- Device actor 113-n - if used - comprises sub-elements to implement a particular function. For example, device actor 113-n has the function to provide mechanical torques and is implemented as an electrical motor.
- Device user interface 114-n - if used - comprises sub-elements such as displays, keyboards, touch-screens, alarm units, for interaction with users (not necessary being user 190 of FIG. 1).
- Device processor 115-n is a processor, such as a computer processor, a central processing unit (CPU) etc.
- Device memory unit 116-n stores instructions for execution by device processor 115-n. The instructions can be arranged in hierarchy. To name only two layers, the instructions can comprise an operating system (or "firmware", instructions provided by the manufacturer of the device) and can comprise applications, or application software (provided by the manufacturer or by others). The instructions can be in the source code of computer languages. Other forms for the instructions are also applicable (e.g., binary code, machine code; code in organized in libraries etc.).

Device data 310-n is the overall term for element parameters 31x-n that control the operation of the elements. By example only, the data can be classified according to device element 11x-n into: data parameters 311-n (or communication parameters, e.g., the identification of a data exchange protocol, or bus protocols such as PROFINET, identification of the presence of data); sensor parameters 312-n (e.g., settings for sensors such as sampling rate, sensor phenomena like temperature or pressure, sensor output format such as integer, Boolean or real number formats); actor parameters 313-n (such as control instructions or control commands that cause the actor to operate); user-interface parameters 314-n (such as parameters that are related to interaction with users, such as on-site users 181, 182); processor parameters 315-n (such as parameter that indicate or set processor speed, core selection); and instruction parameters 316-n (such as the identification of instructions / software to be executed on the device, variables etc.).

When the devices are in operation, the elements can also provide data and can use data. Therefore the parameters 31x-n can comprise such data as well.

Such an overview to devices (with elements and parameters) can only provide an illustrative example. Those of skill in the art can take further details from other sources, such as standards. To name only one: IEC 61131:2018 SER "Programmable controllers" (including descriptions for programming languages in its part 3).

Symbols 21x-n can be available both for device elements (11x-n) and/or for element parameters (31x-n). For example, device data symbols 211-n represent device data interface 111-n, instruction symbols 216-n represent instructions 116-n, and so on. A single symbol can represent both a device element and a parameter (that is related to the particular element).

The above-mentioned zoom indicator (Z) is related to the device/element granularity as well. Simplified, zooming in leads to a transition from device symbols to element symbols (and/or parameter symbols), and zooming out transits to device symbols. Transitioning from a first symbol to a second symbol, as used herein, means that the first system can be replaced (or substituted) by the second symbol. However, symbols in both granularities can be displayed simultaneously.

Symbols 21x-n can be available in symbol variants. For example, in a first variant, a line can symbolize device data interface 111-n. In that case, the line is the symbol of for a bus cable. In a second variant, the same line symbol can change its color (or shape) depending on the availability of data (as bus parameters 311-n). Symbols 21x-n can change its size (i.e. pixel dimensions, being displayed larger or smaller). The changes provide adaptive visualization. Changing the symbol (for one and the same device, element, data etc.) is conditional. Conditions are explained with the already-mentioned Z/J/V functions.

In practical applications, control computer 200 can execute a visualization program for symbols of different types. In case that the visualization is applied to the instructions or to parameters (such as program code for execution by the devices, cf. 116-n in FIG. 2), the visualization program can be tool 230.

In general, tool 230 is a computer program for manipulating the instructions (of the selected device(s)). Tools 230 can be specialized to be (i) an instruction tool is a software tool to configure the instructions in the device (for example by up/downloading instructions, by deploying instructions, by editing instructions), (ii) a data tool is a software tool to handle data (in the devices), and/or parameters, or (iii) a design tool.

An example for an instruction tool is a development environment. Development environments can be typical for device types. For example, visualization approaches for controller devices of the 800xA series (manufacturer ABB) are commercially available as Engineering Workplace.

For the user, navigation to particular environments can be made easier because the choice (or selection) of the environment is a task for the control computer.

### Scenarios

In the following, the description explains scenarios in that devices are explained by way of example. In the scenarios, two or more devices provide functionality, such as heating. As in FIG. 1, the devices are labelled -1 and -2.

In scenario (i) - the heater scenario - first device 110-1 is a heating device with a thermometer as sensor 112-1, and with a heater unit as actor 113-1. Temperature data is transmitted out of the device via data interface 111-1 (implemented as a bus interface), and control data to switch on/off the heater unit is received through data interface 111-1 as well. Device 110-1 has processor 115-1 that executes instructions. In the simplest case, processor 115-1 controls the heater unit. Second device 110-2 is a controller device that implements a feedback loop (for device 110-1). Device 110-2 has processor 115-2 that executes instructions. The instructions comprise variables, such as for a desired temperature to be set by the user. In the scenario, the user set the variables with the help of tool 230.

In scenario (ii) - the power scenario - device 110-1 is an electrical motor (with sensors) and device 110-2 is a motor controller. The motor controller can be implemented as an industrial computer with elements mounted on a rack (e.g., a AC500 mentioned above). The user interacts with the motor and its controller, for example, to commission the instructions that the motor controller has to execute (during operation).

### Virtualization

As mentioned, technical system 100 can be replaced by a virtual system. In that case, at least some of the devices are computer-simulated to virtual devices, and parameters are computer-simulated to virtual parameters. However, the virtualization does modify the operation of control computer 200 only marginally. For example, in non-virtual (i.e., real) implementations, data interface 111-n is configured with particular network addresses, but in virtual implementations, data interface 111-n use addresses or other identifiers that are specific to the simulation of the network.

### User involvement

As control computer 200 interacts with user 190 (cf. FIG. 1) by symbolizing devices and by letting the user interact with the system, the description now investigate different user roles. Presenting different views of the same or of similar data is possible and is convenient for different user activities.

### User Roles

FIG. 3 illustrates a matrix with user roles for human users (e.g., user 190 of FIG. 1) that interact with the technical system 100 and with control computer 200. One natural person can switch between roles. One person can even have two roles at the same time. The roles can be differentiated according to time (horizontally) and space (vertically).

During an engineering/commissioning phase (illustrated on the left), an engineering/commissioning user can have access to the instructions and parameters on the device (cf. FIG. 2, element 116-n, parameters 316-n). For example, the user can interact with the devices to program them (i.e. by loading instructions and parameters to memory 116-n), to configure them (i.e., by configuring the instructions and parameters), and enabling them to communicate with each other (e.g., by setting data parameters 311-n). This list of activities is provided for illustration only. Those of skill in the art know much more purposes.

During an operating phase (illustrated on the right), an operation user can have access to data provided by (and consumed by) the device. It is possible to introduce other phases and/or to sub-classify some phases. For example, diagnosing and maintenance is applicable to the operating phase.

Distinguishing phases is convenient to explain user-system interaction situations, but it is noted that engineering/commissioning and operating can occur substantially simultaneously. However, in some situations the phase must be visible for the user. Therefore the visualization can be different for both phases.

In any phase, the user can be an "on-site" user who is physically located near the technical system 100 (e.g., on the industrial site, the "shop-flor", able to interact with the devices), or can be a "remote-site" user (i.e., "off-site" user) who is physically located elsewhere (e.g., in an office). The roles can therefore be differentiated into: the on-site engineering/commissioning role, the remote-site engineering/commissioning role, the on-site operating role, and the remote-site operating role.

### Virtualization

In case of virtualization (replacement of technical system 100 by the virtual system), the simulation computer can simulate a technical system during the preparation phase so that the user role engineers/commissions a virtual system. It is also possible to extend virtualization into the operation phase, at least until a certain point in time when all system components are real (non-virtual) components. The user in the operating role can therefore operate a virtual system as well.

### Setting the focus for explanation to the remote-site engineering/commissioning role

In the following, description and figures will focus on the remote-site role. Devices 110 are physically located on the industrial site at technical system 100 and control computer 200 would be physically located in an office (i.e. in a remote setting). The communication between the technical system 100 (with device 110) and with control computer 200 can be implemented by a communication network, within the expertise of the skilled person.

Remote-site engineering/commissioning shows problems, among them the following: (i) Usually, schemes etc. on a display provide a topology view (hardware topology, software topology). Graphical representations of the devices and/or of the hardware connections between the devices (i.e. LAN-wires) are symbolized. But the user can't see the devices in reality. (ii) The number of devices (and corresponding symbols having dimensions in pixels) may not fit to the number of pixels that are available on a display.

Adaptive visualization addresses the problems, and the explanation looks at this topic with further detail. It starts with an example.

### Granularity of adaptive visualization

FIG. 4 illustrates technical system 100 with a plurality of devices 110-1 to 110-N and with network interface 140 that communicates selected data 301-n (with element-specific data) to control computer 200 via network 150.

In the example, the devices are communicatively coupled by a bus that is associated with network interface 140. There can be communication between the devices and the control computer 200 with various degree of intensity.

Control computer 200 interacts with user 190 through zoom control 260-Z (cf. FIG. 1 as well for 260 in general), to receive a zoom indicator. The zoom indicator comprises a zoom value being a numerical value that indicates a scaling for the visualization of the symbols on the display. According to the above-introduced convention, the zoom value can be based on pixel numbers.

Optionally, the zoom indicator can comprise change information that the zoom value has to be increased or decreased. Optionally, the zoom indicator can comprise location values that can identify particular symbols. In case that symbols are arranged on the display as a matrix (or a map), the location values can be in vertical direction (Y) and in horizontal direction.

The person of skill in the art can choose a suitable approach to implement zooming. Therefore, the description takes zooming by example with the numerical value being an integer Yi that is a counter for pixels in a symbol in vertical direction of the display.

Depending on the zoom indicator, the control computer selects a sub-plurality of device symbols. The selected symbols represent a sub-plurality of devices (or in other granularity: elements, parameters etc. as introduced in FIG. 2). In the example, the selection is given by exemplary indices -2, -3, -4 and -5. For simplicity of explanation, deriving the selection comprises the selection of symbols that fit to the display (or to a particular part of the display) for a given scaling.

The selection can have two extrema: (i) the selection of all N devices (of the technical system) in case that all corresponding N device symbols would fit to the display; and (ii) a selection of only one device, with a further selection of a particular device element (cf. FIG. 8A/ 250-δ1).

In the example, by setting the scale, user 190 (cf. FIG. 1) has selected symbols 210-2, 210-3, 210-4 and 210-5 that represent devices 110-2, 110-3, 110-4 and 110-5, respectively. In the example, the device selection corresponds to the corresponding device symbols that fit to the display.

In other words, the user has selected a sub-set of the plurality of devices (4 < N). Data is transferred to control computer for the selected devices, but not necessarily for all devices.

It is noted that the symbols my change to represent instructions, parameters, setting etc. In the example of FIG. 4, the vertical line (at the right side of the device symbols) stands for the bus (that connects devices 110 in system 100).

During engineering/commissioning, the data that is communicated to control computer 200 can be related to the state of the installation (of instructions). In the example, symbol 210-4 indicates an exclamation mark, indicating that setting up the instructions for device 110-4 has not yet been completed.

Looking at the above-mentioned constraints (problems), adaptive visualization addresses some aspects: The user can see relevant data (i.e., (not) instructions completed by one symbol). The number of symbols is reduced to the selection of devices. Looking at the scenarios, assuming scenario (i), the symbols would include symbols for the heating device and for the controller device.

Besides complexity (for the user), the selection of symbols (on display, and corresponding devices) can impact the performance of control computer. Data is obtained for selected devices, but not for all. Hence the computational resources for transferring data can be reduced. Such an approach can be especially relevant during the operation phase (cf. FIG. 3)

As illustrated, the user can operate zoom control symbol 260-Z to scale up (i.e. to increase the number of device symbols) or to scale down (i.e., to decrease the number of devices symbols).

Zooming (i.e. selecting devices, parameters, instructions) changes the quantity of the symbols, but can also change the appearance of the symbols, and /or the data to be visualized. This is now explained in a further granularity, with further symbols.

### Control Symbols for Adaptive Visualization

FIG. 5 illustrates (on the left side) display 250 (with two selected device symbols 210-L and 210-K) in combination with user interaction symbols being (i) zoom control symbol 260-Z (already known from FIG. 4), (ii) jump control symbol(s) 260-J ("J-->"), and (iii) view control symbol(s) 260-V ("V-->").

Zoom control symbol 260-Z can be located at relatively fixed position on display 250. With zoom control symbol 260-Z, the user can interact with all the symbols on the display. Usually there is only a single zoom control symbol.

Control symbols 260-J and 260-V (zero, one or more symbols per display) can be located relatively closed to device symbols (or element symbols). In the example, control symbols 260-J and 260-V are associated with device symbol 210-L. This symbol association provides a further granularity. The association is specialized to a particular device (or element), but excludes other devices (in the example, the symbol for 210-K). In the examples, the association is illustrated by control symbols 260-J and 260-V that partially overlay the device symbols (or the element symbols).

Those of skill in the art can implement user interaction with control symbols 260-Z, -J or -V. The functions (zoom control, jump control, and view control) are visualization-change functions.

On the right side, FIG. 5 also illustrates a legend. Zoom control symbol 260-Z changes the quantity (of the device symbols). Jump control symbol 260-J activates a jump function that allows the user to interact with a different application but to keep the relation to the device (for that the symbol is associated with the J-symbol). This is illustrated by an application being a development environment. View control symbol 260-V just changes the appearance of a symbol, but keeps the zoom scale.

The functions are now illustrated with FIGS. 6-8 that show display 250 in four variations 250-α, 250-β, 250-γ and 250-δ.

### Mapping from zoom data to symbol selection

FIG. 6 illustrates display 250 in variations for four zoom values in combination with a table. The table is implemented by control computer 200 and can be pre-defined. In general, there is a mapping between zoom data (such as zoom values, zoom ranges) to a selection of symbols, optionally to a selection of data symbols to be visualized. The granularity is given for devices with elements, so that the symbols are device symbols and element symbols.

In other words, the symbols are related to a device with different elements. Element 1 can be rack with card slots. The rack would be higher-level component. Element 2 can be particular card that is inserted into the rack, being a device, such as a card with a controller unit, a card with a CPU, a I/O card, a field bus card etc. Element 3 is a part such a card, in the example a plug-in-connector. Element 4 is a further detail, such as a cable that is associated with the plug. From a different perspective, elements 1 to 4 stand for a computer, such as the industrial computer of above-mentioned scenario (ii).

For convenience of illustration, zoom is explained by a numerical value Y that stands for the number of pixels for a particular symbol. Adding an index to "Y" (Y1 ... Y4) illustrates zoom in (increasing index) or zooming out (decreasing index). The description concentrates on zooming in (illustrated from left to right).

Assuming that display 250 has an overall number of YDISP vertical pixels (e.g., YDISP = 1080). The discussion can also be made for pixels in horizontal direction (as mentioned, XDISP as the overall number of pixels in that direction). Y1 to Y4 indicate the vertical extension of the particular symbol for element 1. While the zoom control symbol (cf. 260) is not illustrated, there is a relation between the zoom values: Y1 < Y2 < Y3 < Y4. Y4 can be larger than YDISP with the consequence that the symbol for element 1 can't be displayed in full (cf. 250-δ). The zoom values can also be defined relatively to the size of the display: Yi/YDISP (for the vertical direction). The relation between the zoom values can also be processed as: Y1/YDISP < Y2/YDISP < Y3/YDISP < Y4/YDISP.

According to the table, the symbols change their appearance by adaptation according to the zoom value. The table provides a mapping between the zoom values and a corresponding symbol selection. Those of skill in the art can implement the table as a computer-program module with the zoom value as input and element symbol as output (e.g. no = no symbol, yes = symbol to show etc.)

As in variation 250-α for Y1, element 1 is visualized by a scaled symbol (e.g., Y1 = 300 pixels for a YDISP = 1080 pixel display), other elements 2, 3 and 4 (that belong to a device) are not visualized.

As in variation 250-β for Y2, element 1 is visualized by the same scaled symbol i.e. slightly larger (e.g., Y2 = 350 pixels), but the other elements 2, 3 and 4 are not visualized.

As in variation 250-γ for Y3, element 1 is visualized by the same scaled symbol i.e. again slightly larger, but element 2 is visualized as well. Element 2 is symbolized by two horizontal lines that fit into the symbol for element 1.

As in variation 250-δ for Y4, element 1 is still visualized but only partially, element 2 is no longer visualized, but replaced by a circle with a horizontal line - standing for the plug (element 3) and the cable (element 4). Element 4 also shows data "999 busy" that is available for that device element (e.g., a device data interface). The data at element 4 is illustrative for communication settings such as input/output settings.

Zoom values can be aggregated or classified into zoom ranges, such as pre-defined min-max-ranges. The min/max values that limit the ranges can be considered as threshold values. In the example, Y1 and Y2 belong to zoom range 1 (mini < Y1, Y2 < max1), Y3 belongs to zoom range 3 (min3 < Y3 < max3), and Y4 belongs to zoom range 4 (min4 < Y4 < max4).

Likewise, zoom ranges (or zoom levels) can be defined for textual attributes such as "very far", "far", "normal", "close", "very close". In the example of FIGS. 6-8A/8B, the ranges go from "far" to "close" from left to right.

### View Control

FIG. 7 illustrates display 250 in variations with different symbols, to show view control. While there is a zoom-to-symbol mapping that changes the symbols between zoom range 1 (250-α and 250-β) and zoom range 2 (250-γ and 250-δ), an adaptation of the view is possible in zoom range 2 for a selection of symbols depending on user-interaction with view control 260-3. In other words, view control 260-3 allows changing the view by changing the symbols.

As illustrated, view control 260-3 is provided in association with element 2 (for example, by overlay). The user can toggle between different symbols (as in variations 250-γ and 250-δ). This view adaption function can be limited to a pre-defined zoom range (here range 2). Toggling the symbols keeps the zoom range unchanged. Element 2 can be a rectangle (in a first view) or can be circle (in a second view).

Although the illustration is simplified to differentiate different symbols, the person of skill in the art can implement further features. For example, obtaining data from a technical system that is in operation (live data, cf. FIG. 5) requires computation resources, and potentially slows down the operation of the control computer. In response to that, by changing the view the user can - at any time - request data, and - at any time as well - the user can stop the transfer of data. In other words, different views (as selected by the user) have different data traffic within the technical system (and/or through the interface at the border of the system).

### Instruction Tools

FIGS. 8A and 8B illustrate display 250 with jump control in variations with different symbols (in FIG. 8A row above, 250-α, 250-β1, 250-γ1 and 250-δ1) and in variations with different instruction tools 230 (in FIG. 8A row below, 250-β2, 250-γ2 and 250-δ1*/**). The instruction tools show program code (such as source code, abbreviated as "1x1x1x1 ..." for code in element 1, etc.) in hierarchy (vertical and horizontal lines).

Unidirectional arrows indicate visualization transitions (from element/device symbols to instruction tools 230, cf. FIG. 2). It is contemplated to implement the transition in the opposite direction as well. The person of skill in the art can implement the transitions based on the description herein that concentrates on the transition as indicated by the arrows. In other words, the arrows stand for a navigation function to/from user interfaces (i.e. to/from instruction tool 230) that are specialized for instruction settings.

As in variation 250-α, display 250 shows element 1 in the Y1 scale, as in FIG. 6.

As in variation 250-β1, display 250 shows element 1 in the Y2 scale (slightly different, Y2 > Y1, more zoom in) in association with jump control symbol 260-3. The association is provided by convention, in the example, by placing jump control symbol just below the symbol for the element. Staying with the assumption that element 1 is the industrial controller (of scenario (ii), the user has now the option to investigate the instructions that are to be loaded to this controller (during commissioning) or that are to be modified (during operation, for maintenance or other reasons). In the example, the jump target is a development environment (for the code of element 1, as in variation 250-β2.

As in variation 250-γ1, there are elements 2a and 2b (e.g. individual cards in the rack) with associated jump control symbols. Is it noted that these jump control symbols becomes available with a pre-defined zoom value (e.g., Y3), or zoom range 2.

The user interacting with jump control symbol at element 2b reaches the development environment for element 2b, as in variant 250-γ2. In the figure, the hierarchy relation between element 1 and elements 2a/2n is reflected in the development environment as well (cf. the hierarchy lines). Likewise, there would be a jump to the environment for element 2a (not illustrated).

In case that the tools (or the development environments to be more specific) are different for 2a and 2b, the user guided to the tool that is suitable. From a different perspective, if it can't be avoided that different tool are to be used (cf. different manufacturers), the differentiation of the tool is implemented in a graphical user interface (cf. display 250) and the burden to select the tool is hidden from the user.

In case that the devices have different capabilities to be configured, the tools (that can be reached by jumping) can be different as well. For example, in the above-mentioned scenario (ii), the controller device can be configured from an external computer, for example by the control computer that run an development environment (as instruction tool 230), wherein in scenario (i) the heating device would have to be configured by operating UI-elements on the devices. In such case, the tool would be different (e.g., to be a manual tool, with pictures that explain the configuration).

As in variation 250-δ1, at the Y4 zoom value, element 3 is visualized, but with two jump options * and **. (The * just illustrate that the jump control symbols can be different in appearance to the user). Option * lets the user reach the development environment of the element 3 (cf. variant 250-δ2* with code for element 3, again in hierarchy) and option ** lets the user reach something different: a design tool, for example, to modify communication parameters, or to have a visual representation of the element (e.g. to see the plug in different view, from above, from a side, etc., useful for remote-site users).

FIG. 8B illustrates display 250 in variations during a sequence of jump und zoom interactions. In general, the figure illustrates an optional symbol-instruction-symbol transition (i.e., symbol-code-symbol transition) in both directions, with different start and end symbols and with temporary guidance by changing the zoom value.

In one embodiment for this feature, the user looks at the symbol of a first element, uses the jump control symbol to edit corresponding code within the development environment, navigates within the environment to reach code of a second element, and uses the jump control symbol to look at the symbol for the second element. In order to visualize a relation between both elements, the display 250 does not immediately go from second-element-code to second-element-symbol, but shows a transition in a zoom-out scale.

More in detail, FIG. 8B illustrates display 205 in consecutive points in time intervals, from t1 to t6.

During t1, the display shows variation 205-γ1, with the symbol for element 2b (e.g., a particular card in the rack) together with an associated jump control symbol, similar as illustrated in FIG. 8A. The display can show other symbols, but for convenience of explanation, the figure is simplified. It can be assumed that at the end of t1, the user interacts with the jump control symbol.

During t2, the display shows variation 205-γ2, that is the development environment with code for element 2b, similar as in FIG. 8A. It can be assumed that during t2, the user navigates away from the 2b code to arrive at different code.

During t3, the display shows variation 205-γ2'. That is the code for element 2a, with a jump control symbol. As element 2a is different from element 2b, they are physically separated.

During t4, the display shows variation 250-β1', being the example for the transition in the zoom-out scale. Assuming that both elements 2a and 2b are sub-elements to element 1 (e.g., two cards in the same rack), the display shows the symbol for element 1. In the example, variation 250-β1' shows element 1 with both sub-elements 2a and 2b. The user has now the opportunity to recognize that both elements are physically connected. During t4, the display can zoom out gradually.

During t5, the display shows variation 205-γ1'. That is the symbol for element 2a. From t4 to t5, the display can have zoomed in gradually. The example is simplified, and the transition via zoom-out can have more steps. The transition can visualize the physical path between the first element to the second element (e.g., the cards) by reaching a visualization of a higher-ranking element that connects both (e.g., the rack). In case of more complex connections, the intermediate elements are illustrated as well (e.g., from a first card in a first rack to a first industrial machine, from the first industrial machine via a network to a second industrial machine, from a second rack of the second machine to the second card).

During t6, the display shows variation 205-γ1". That is the previous symbol in combination with the jump control symbol. The user can go back to the code (for element 2a) if needed).

The illustration of FIG. 8B is simplified, but the person of skill in the art can add further variations. Further embodiments of this feature can instruction-symbol-instruction transitions (i.e. from code to symbols to code).

It is noted that the data to implement the feature is available and has been explained above (cf. zoom value, predefined table as in FIG. 6, relations between elements in hierarchy etc.).

### Flow-chart

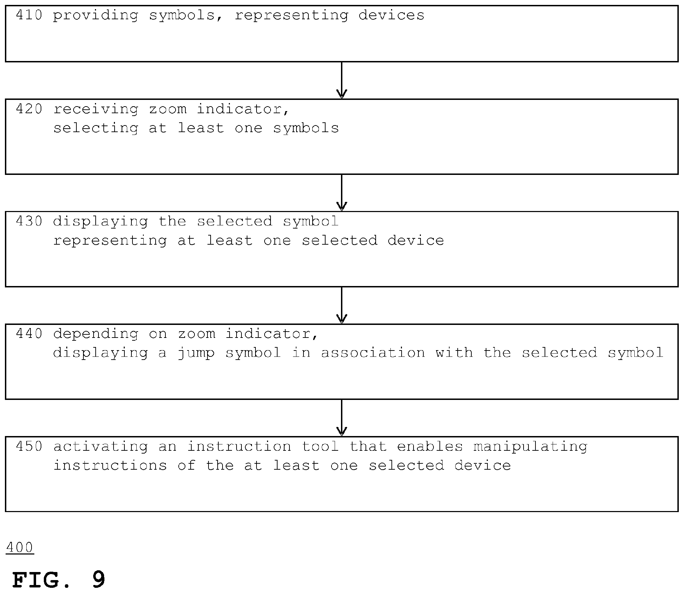

FIG. 9 illustrates a flow-chart diagram of computer-implemented method 400 for setting up devices, wherein a plurality of devices 110-1 ... 110-n, 110-N (cf. FIG. 1) belongs to technical system 100, and wherein devices 110-1 ... 110-n, 110-N have memory units (cf. 116-n) that store instructions. The method can also be regarded as a method for generating a user interface for device setup.

In step providing 410, the control computer provides plurality of symbols (cf. 210-1... 210-N in FIG. 2, and the symbols in FIGS. 6, 7, 8A, 8B) on its display 250 to user 190. The symbols represent at least some of the devices.

In step receiving 420, the control computer receives a zoom indicator and a selection of at least one symbol (210-K ... 210-L, cf. FIG. 5, and/or the symbols in FIGS. 6, 7, 8A, 8B).

In step displaying 430, the control computer displays the (at least one) selected symbol on display 250. The (at least one) selected symbol represents at least one selected device.

Depending on the zoom indicator, in step displaying 440, the control computer displays (at least one) jump control symbol 260-J (cf. FIGS. 8A, 8B) in association with the (at least one) selected symbol.

Upon receiving a user interaction with jump control symbol 260-J, in step activating 450, the control computers activates an instruction tool 230 (cf. FIG. 8A) that enables manipulating the instructions of the (at least one) selected device.

To summarize the features of FIG. 8A, the method can be enhanced by receiving a further user interaction from the activated instruction tool (in FIG. 8A t2 to t3, reaching code for element 2a), by determining further instructions that are associated with a further selected device (e.g. the code for element 2a), receiving a user interaction via a further jump control symbol (cf. 250-y2', with the J-symbol at the corner on the right) and providing a visual transition between the symbol of the selected device (i.e., element 2b) and the symbol of the further selected device (i.e., element 2a), wherein the transition is displayed in a zoom-out scale (as in display 250-β1' during t4).

FIG. 9 also illustrates a computer program or a computer program product. The computer program product - when loaded into a memory of a computer and being executed by at least one processor of the computer - performs the steps of the computer-implemented method. So in other words, the blocks in FIG. 9 illustrate that the method can be implemented by control computer 200 under the control of the program.

In case of virtualization, the method (with its variations that are explained) is characterized by its application to a virtual system that replaces technical system 100. In other words, system 100 with its devices 110-n is being simulated by a computer. The simulating computer can be separate to computer 200, or can be integrated with computer 200.

### Generic computer

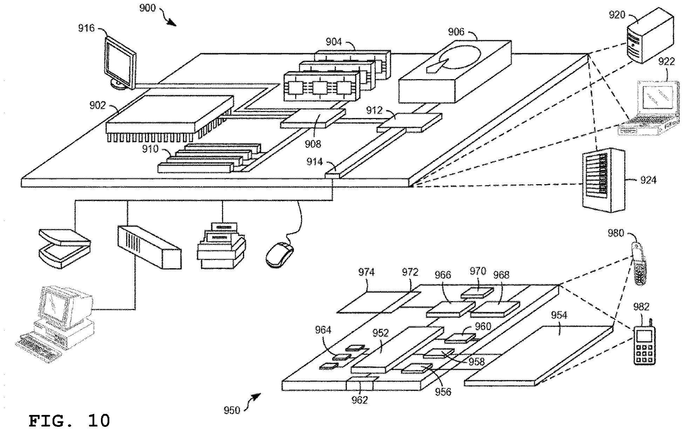

FIG. 10 is a diagram that shows an example of a generic computer device and a generic mobile computer device, which may be used with the techniques described herein. Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

### Further aspects

Having explained embodiments, the description continues with discussing further aspects. Symbols can be scaled symbols or can be non-scaled symbols. There can be scaling in relation to the physical dimensions of the devices, of the industrial sites etc. Symbols for devices with similar (or identical function) can be different for devices from different manufacturers.

Symbols for devices can be become too small on a screen to see details. For example, a textual label on symbol might become illegible. Taking variation 250-α (in FIGS. 6- 8) as example, Y1 (or zoom range 1) might be suitable for including text, but in other scales, the text can be omitted (or presented via a view control symbol 260-V for user-selected display).

The symbols can be enhanced by further data, such as figures (0....9), letters (A ...Z), color-coded elements, or others. This topic is relevant for all users, but especially for the remote-site users.

Symbols (and/or further data) can change appearance and information if data is updated. In other words, the symbols can be dynamic symbols.

Using reality-approximating symbols, the display can mimic the real appearance of a device with its elements (such as a PLC in scenario (ii) with its modules). For example, the symbols can be pre-defined from images that comprise CAD-representations of the devices (or its elements) or that comprise photos or pictures of the device (or its elements).

To arrange the symbols on the display, the person of skill in the art can apply auto-placement algorithms.

According to the above-introduced convention, devices comprise processors and memory (with instructions), and symbols represent devices. However, this does not mean that symbols represent devices only. In further embodiments, symbols can also represent hardware elements that are not devices (such as cables, racks etc.)

Symbols (and tools that can be reached from symbols via jump control) can be enhanced - depending on the zoom indicator - with further user interaction capability. To name only one example, an information window can be displayed next to an input/output variable. The variable represents the state of the technical system (at least partially). If the variable is configured incorrectly, the information window can be window that the user has to acknowledge.

### Other User Roles

Having explained embodiments that concentrate on the remote-site engineering/commissioning role of the user, the description continues with discussing advantages for the other roles.

The devices can be physically located in different parts of a larger site (e.g., a factory). The user can be located in communicative distance with a first device (being able to use the user-interfaces of that first device), and can commission a second device that is located elsewhere, by the control computer.

The degree of reality approximation can be reduced for on-site users (that see the device in reality) thus saving computational resources for rendering images and so on.

Users might change their roles, but the interaction with control computer is not changed. For example, a remote-site operating user may turn into a remote-site installing user (e.g., in case of maintenance, or repair), or vice versa.

Symbols can be images such as photos or drawings that approximate the visual appearance of the device to the user. This is convenient for remote-site users, but - using the view control - on-site users (who actually see the devices) can replace the photo by other views.

Symbols can be differentiated between the time phases (during engineering/commissioning, during operation, cf. FIG. 3). For example, during commissioning, there can be a pre-defined preference for configuration data (bus configurations, connector settings, IP addresses etc.). During operation, there can be a pre-defined preference for run-time (e.g., data from sensors, data to actors).

Visualization is not limited to symbols of the devices. Visualization is also applicable to the instructions (in memory) that control the devices. Instructions comprise device firmware, operating systems of the devices, code in a programming language (source code, machine code etc.). Instructions are usually visualized in programming environments.

### Further navigation and jump options

The navigation path from a jump origin to a jump destination can be determined according to data flow. For example, a controller sends control commands to the heater (cf. the above scenario (i)). Since the communication or data parameters (cf. for example, 311-n in FIG. 3) are known, computer 200 can determine the jump destination according to the communication parameters (e.g., from the controller, to a bus, from the bus to a network switch, from the switch to a further bus, to the heater, etc.). Devices that participate in the communication (e.g., to communicate the control command) can be visualized to the user (of computer 200). There is no need to that use know the jump destination in advance.

Depending on the zoom, manipulating the instructions (via instruction tool 230, cf. step 450 in FIG. 9), can be enable or disabled depending on the scaling and/or on the size of the display. Users of a control computer with a relatively small display (e.g., the computer being a mobile device) may only be enabled to change or edit variables, parameters or other part of existing instructions (cf. 250-β, 250-γ, 250-δ in FIG. 8A), but users of a control computer with a relatively large display (e.g., the computer being a desktop computer with a flat screen display may be enabled to add or to remove instructions. This zoom/display dependent allowing/blocking of user interaction can be advantageous in protecting the control computer to introduce errors. In other words, the user can be forced to look at a sufficiently large display and/or to choose a suitable scaling.

### References

- 100: technical system
- 110: device
- 11x: device elements
- 140: network interface
- 150: network
- 190: user
- 200: control computer
- 210: device symbols
- 21x: element symbols
- 230: instruction tool
- 250: display
- 260: control interface (zoom/jump/view control symbol 260-Z/J/V)
- 310: device data
- 31x: element parameters
- J: jump
- n, N: device index, number of devices
- K, L: index for selected devices and/or symbols
- V: view
- Y: number of pixels
- Yi: zoom value
- Z: zoom indicator

## Claims

1. Computer-implemented method (400) for setting up devices, wherein a plurality of devices (110-1... 110-n, 110-N) belongs to a technical system (100), and wherein the devices (110-1... 110-n, 110-N) have memory units (116-n) that store instructions, the method comprising the following steps:
providing (410) a plurality of symbols (210-1... 210-N) on a display (250) of a control computer (200), to a user (190), the symbols (210-1... 210-N) representing at least some of the devices (110-1... 110-N);
receiving (420) a zoom indicator and a selection of at least one symbol (210-K ... 210-L);
displaying (430) the at least one selected symbol (210-K ... 210-L) on the display (250), the at least one selected symbol (210-K ... 210-L) representing at least one selected device;
depending on the zoom indicator, displaying (440) at least one jump control symbol (260-J) in association with the at least one selected symbol; and
upon receiving a user interaction with the jump control symbol (260-J), activating (450) an instruction tool (230) that enables manipulating the instructions of the at least one selected device, wherein a change of an instruction causes a change in the technical state of the at least one selected device.

2. The method according to claim 1, wherein the technical system (100) provides a plurality of data records to a network (150) at a network interface (140), the method further comprising:
forwarding an identification (K, L) of the at least one device (110-K ...110-L) to the network interface (140);
receiving a sub-plurality of data-records from the network interface (140); and
displaying the sub-plurality of data-records on the display (250) in association with the at least one selected symbol (220L ... 220-L).

3. The method according to claim 1, wherein in step receiving (420) the zoom control indicator (260-Z), the zoom control indicator (260-Z) is received as a numerical value that determines the scaling of the symbols (220-K ... 220-L) in relation to the size of the display (250).

4. The method according to claim 3, wherein in step receiving (420), the zoom indicator (260-Z) is related to the overall number of pixels on the display (250).

5. The method according to claim 3, wherein in step receiving (420) the zoom indicator (260-Z), the numerical value is compared to at least one threshold value to provide a zoom range classification (range 1, range 2), wherein the zoom range classification determines a selection of symbol variants (α, β, γ, δ) for the symbol that are to be displayed according to pre-defined rules.

6. The method according to claim 1, further comprising:
depending on the zoom indicator, displaying at least one view control symbol (260-V) in association with the at least one selected symbol; and
upon receiving user interaction with the view control symbol (260-V), changing the appearance of the at least one selected symbol.

7. The method according to claim 1, wherein the control computer (200) uses a control interface (260) to implement a user interaction function, for adapting a visualization zoom, for jumping to an instruction development environment, or for switching a view of the selected symbols.

8. The method according to any of the preceding claims, wherein in step receiving a zoom indicator, the zoom indicator also selects element symbols that represent elements, being part of the devices, or selects parameter symbols that represent parameters of the devices.

9. The method according to any of the preceding claims, with the following further steps: receiving a further user interaction from the activated instruction tool (230), thereby determining further instructions that are associated with a further selected device, receiving a user interaction via a further jump control symbol and providing a visual transition between the symbol of the selected device and the symbol of the further selected device, wherein the transition is displayed in a zoom-out scale.

10. The method according to any of the preceding claims, **characterized by** its application to a virtual system that replaces the technical system (100).

11. A control computer (200) that enables a user to set up devices that belong to a technical system (100), the control computer (200) comprising a display (250) and being **characterized by** being adapted to perform a computer-implemented method according to any of claims 1-10.

12. A computer program product - when loaded into a memory of a computer and being executed by at least one processor of the computer - performs the steps of the computer-implemented method according to any of claims 1-10.
